# EUROPÄISCHE PATENTSCHRIFT

(11) **EP 4 487 184 B1**
(45) Veröffentlichungstag und Bekanntmachung des Hinweises auf die Patenterteilung: **30.07.2025**
(21) Anmeldenummer: 23731968.6
(22) Anmeldetag: 01.06.2023
(51) Int. Cl.: G05B 19/408

(54) **VERFAHREN ZUM BETREIBEN EINER WERKZEUGMASCHINE, COMPUTERPROGRAMMPRODUKT, STEUEREINHEIT, WERKZEUGMASCHINE, SIMULATIONSPROGRAMMPRODUKT UND VERWENDUNG EINER STEUEREINHEIT**
METHOD FOR OPERATING A MACHINE TOOL, COMPUTER PROGRAM PRODUCT, CONTROL UNIT, MACHINE TOOL, SIMULATION PROGRAM PRODUCT AND USE OF A CONTROL UNIT
PROCÉDÉ DE FONCTIONNEMENT D'UNE MACHINE-OUTIL, PRODUIT-PROGRAMME INFORMATIQUE, UNITÉ DE COMMANDE, MACHINE-OUTIL, PRODUIT-PROGRAMME DE SIMULATION ET UTILISATION D'UNE UNITÉ DE COMMANDE

(30) Priorität: 08.06.2022 DE 102022205809
(43) Veröffentlichungstag der Anmeldung: 08.01.2025
(73) Patentinhaber: Siemens Aktiengesellschaft, 80333 München (DE)
(72) Erfinder: SPIELMANN, Ralf, 70569 Stuttgart (DE)
(74) Vertreter: Siemens Patent Attorneys
(86) Internationale Anmeldenummer: PCT/EP2023/064699
(87) Internationale Veröffentlichungsnummer: WO 2023/237411

(56) Entgegenhaltungen:
- EP-A1- 2 336 839
- EP-A2- 2 216 698
- DE-A1- 102008 063 858
- US-A1- 2018 239 312
- US-A1- 2020 225 642

## Beschreibung

Die Erfindung betrifft ein Verfahren zum Betreiben einer Werkzeugmaschine und ein dazu ausgebildetes Computerprogrammprodukt. Die Erfindung betrifft ebenfalls eine entsprechende Steuereinheit und eine Werkzeugmaschine mit einer solchen Steuereinheit. Nicht vom Schutzumfang umfasst sind ein Simulationsprogrammprodukt und eine Verwendung einer Steuereinheit.

Aus der Patentanmeldung EP 2 216 698 A2 ist ein Verfahren zum Erzeugen von transformierten Steuerdaten für eine Werkzeugmaschine bekannt. Darin werden Steuerdaten bereitgestellt, die eine vorgesehen Bearbeitung eines Werkstücks beschreiben, das in einer Lage eingespannt ist, die einem Einspannsituation-Sollzustand entspricht. Weiter wird für das Werkstück ein Einspannsituation-Istzustand ermittelt und mit dem Einspannsituation-Sollzustand abgeglichen. Hieraus wird eine Einspannsituation-Abweichung ermittelt und basierend hierauf transformierte Steuerdaten berechnet.

Werkzeugmaschinen werden zur Fertigung von zunehmend geometrisch komplexen Bauteilen eingesetzt. Ebenso steigt die Anzahl an betätigbaren Maschinenachsen in Werkzeugmaschinen. Gleichermaßen werden zunehmende Anforderungen an Werkzeugmaschinen bezüglich der Kosteneffizienz in Anschaffung und Betrieb gestellt und die Verwendung möglichst einfacher Steuereinheiten gefordert. Dies gilt insbesondere im Hinblick auf komplexe hochleistungsfähige Steuereinheiten, die aufgrund rechtlicher Einschränkungen nicht überall verfügbar sind. Ferner wird zwischen unterschiedlichen Werkzeugmaschinen insofern Kompatibilität angestrebt, so dass Teileprogramme auf unterschiedlichen Bautypen von Werkzeugmaschinen in einfacher Weise ablauffähig sind. Der Erfindung liegt die Aufgabe zugrunde, in zumindest einem der oben skizzierten Aspekte eine Verbesserung bereitzustellen.

Die Aufgabenstellung wird durch ein erfindungsgemäßes Verfahren zum Betreiben einer Werkzeugmaschine gelöst. Die Werkzeugmaschine weist eine erste Anzahl an Maschinenachsen auf, durch die ein Werkzeug translatorisch und rotatorisch beweglich ist. Die Maschinenachsen umfassen somit Translationsachsen und Drehachsen. Die Maschinenachsen sind jeweils durch ein Antriebsmittel beweglich und über eine Steuereinheit betätigbar. Insbesondere können die Maschinenachsen jeweils unmittelbar durch ein einziges Antriebsmittel beweglich sein. Die Steuereinheit ist der Werkzeugmaschine zumindest funktionell zugeordnet. Weiter ist die Steuereinheit dazu ausgebildet, bezogen auf einen Referenzpunkt an der Werkzeugmaschine, eine Koordinaten-Transformation um eine zweite Anzahl an Maschinenachsen durchzuführen. Das Verfahren umfasst einen ersten Schritt, in dem ein Teileprogramm bereitgestellt wird, das zu einem Bearbeiten eines Werkstücks mittels der Werkzeugmaschine ausgebildet ist. Das Teileprogramm umfasst beispielsweise eine Mehrzahl an Anweisungen für zumindest eines der Antriebsmittel, durch vom Werkzeug ein Bearbeitungspfad unmittelbar entlang einer Oberfläche des Werkstücks oder beabstandet zur Oberfläche des Werkstücks abfahrbar ist. Weiter weist das Verfahren einen zweiten Schritt auf, in dem zumindest eine Drehachse unter den Maschinenachsen ermittelt wird. Die ermittelte zumindest eine Drehachse wird im zweiten Schritt für Betätigungen gesperrt. Das Sperren kann als ein mechanisches Blockieren ausgebildet sein, ein Unterdrücken von Steuerbefehlen an das entsprechende Antriebsmittel und/oder als eine Annahmeverweigerung von Steuerbefehlen durch das entsprechende Antriebsmittel. Die ermittelte Drehachse wird im zweiten Schritt im Wesentlichen in einer vorliegenden oder eingestellten Lage arretiert.

Des Weiteren umfasst das Verfahren einen dritten Schritt, in dem Steuerbefehle für eine Mehrzahl an Maschinenachsen ermittelt wird, durch die ein Teileprogramm durchführbar ist. Die Mehrzahl an Maschinenachsen, für die die Steuerbefehle im dritten Schritt ermittelt werden, umfassen nicht die im zweiten Schritt ermittelte und gesperrte zumindest eine Drehachse. Der dritte Schritt erfolgt damit unter Ausschluss der Drehachse aus dem zweiten Schritt. Im dritten Schritt können die Steuerbefehle über eine Koordinaten-Transformation ermittelt werden, die mit der von der Werkzeugmaschine im zweiten Schritt eingenommen Stellung korrespondiert. Mit anderen Worten werden die Steuerbefehle im dritten Schritt so ermittelt, als existiere die im zweiten Schritt ermittelte Drehachse nicht.

Ferner weist das Verfahren einen vierten Schritt auf, im dem die im zweiten Schritt ermittelte und gesperrte Drehachse wieder entsperrt wird und in einer Bearbeitungsstellung eingestellt wird. Die Bearbeitungsstellung ist die Stellung, in der eine Bearbeitung des Werkstücks zu erfolgen hat. Das Antriebsmittel der im zweiten Schritt ermittelten Drehachse wird im dritten Schritt in die Bearbeitungsstellung gebracht. Weiter wird im dritten Schritt eine korrespondierende Drehbewegung ermittelt, durch die die Drehachse ihre Bearbeitungsstellung erreicht. Zum Ermitteln der korrespondierenden Drehbewegung kann ein Messen eines Drehwinkels und einer Drehrichtung gehören. Darüber hinaus umfasst das Verfahren einen fünften Schritt, in den ein angepasster Steuerbefehlssatz für die Mehrzahl an Maschinenachsen ermittelt wird. Der angepasste Steuerbefehlssatz wird basierend auf den im dritten Schritt ermittelten Steuerbefehlen und der im vierten Schritt ermittelten Drehbewegung berechnet. Dazu kann anhand der Drehachse aus dem vierten Schritt eine Koordinaten-Transformation der Steuerbefehle aus dem vierten Schritt erfolgen. Im fünften Schritt werden im Wesentlichen die Steuerbefehle aus dem dritten Schritt in eine Stellung der Werkzeugmaschine überführt, die mit der im vierten Schritt eingestellten Bearbeitungsstellung korrespondiert. Der angepasste Steuerbefehlssatz stellt damit eine koordinaten-transformierte Abwandlung der Steuerbefehle aus dem dritten Schritt dar. Des Weiteren umfasst das erfindungsgemäße Verfahren, dass das Werkstück dadurch bearbeitet wird, dass der angepasste Steuerbefehlssatz abläuft. Mittels des angepassten Steuerbefehlssatzes werden die Antriebsmittel einer Mehrzahl an Maschinenachsen betätigt und das Werkzeug in Bewegung versetzt.

Das erfindungsgemäße Verfahren erlaubt es in einfacher Weise, Teileprogramme auf unterschiedliche Werkzeugmaschinen zu übertragen. Durch das zwischenzeitige Sperren der zumindest einen Drehachse wird die Anzahl an Freiheitsgraden reduziert, was eine einfachere Koordinaten-Transformation um weniger Maschinenachsen erlaubt. Hierdurch ist der erforderliche Rechenaufwand reduziert.

In einer Ausführungsform des beanspruchten Verfahrens kann die erste Anzahl an Maschinenachsen drei Drehachsen, insbesondere genau drei Drehachsen, umfassen.

In einer weiteren Ausführungsform des beanspruchten Verfahrens ist die erste Anzahl an Maschinenachsen höher ist als die zweite Anzahl an Maschinenachsen. Die Werkzeugmaschine weist dementsprechend mehr Maschinenachsen auf, als durch die Koordinaten-Transformation verarbeitbar sind. Insbesondere kann die erste Anzahl Fünf sein und die zweite Anzahl Vier. Alternativ kann die erste Anzahl Sechs oder Siebens sein und die zweite Anzahl Fünf. Steuereinheiten mit einer reduzierten Anzahl an verarbeitbaren, also koordinaten-transformierbaren, Maschinenachsen sind besonders kosteneffizient und sind in einfacher Weise verfügbar. Das beanspruchte Verfahren erlaubt es, mit einer einfachen Steuereinheit mit einer reduzierten Anzahl an koordinaten-transformierbaren Maschinenachsen im Wesentlichen die gleichen technischen Vorzüge zu erzielen wie mit einer komplexeren Steuereinheit, mit der mehr Maschinenachsen koordinaten-transformierbar sind.

Des Weiteren kann der Referenzpunkt der Werkzeugmaschine im beanspruchten Verfahren ein Werkzeugbezugspunkt sein. Der Werkzeugbezugspunkt, auch Tool Center Point, kurz TCP genannt, kann beispielsweise eine Spitze eines Fräsers, ein Mittelpunkt eines Schneidrads, eine Spitze eines Roboter-Manipulators oder eine Abgabedüse einer Lackiervorrichtung sein. Durch den Werkzeugbezugspunkt ist der Ablauf des Teileprogramms in einfacher Weise beschreibbar.

In einer weiteren Ausführungsform des beanspruchten Verfahrens kann zumindest eine der Maschinenachsen zu einem Bewegen des Werkzeugs ausgebildet sein oder zu einem Bewegen des Werkstücks. Das bewegte Werkzeug kann beispielsweise ein Fräser sein. Die Maschinenachse, die das Werkstück bewegt, kann beispielsweise eine drehbare Einspannung des Werkstücks sein, wie beispielsweise bei einer Drehbank. Das beanspruchte Verfahren ist daher auf eine Vielzahl an Werkzeugmaschinen übertragbar.

Ferner können der vierte und fünfte Schritt des beanspruchten Verfahrens für eine Mehrzahl an Drehachsen durchgeführt werden. Beispielsweise kann die Werkzeugmaschine um mehrere Drehachsen gesperrt werden und sukzessive für jede der gesperrten Drehachsen einzeln oder kombiniert eine geeignete Koordinaten-Transformation für Steuerbefehle durchgeführt werden, um einen angepassten Steuerbefehlssatz zu ermitteln. Das beanspruchte Verfahren ist somit ohne Weiteres auf komplexe Werkzeugmaschinen mit einer erhöhten Anzahl an Maschinenachsen übertragbar, beispielsweise auf Werkzeugmaschinen mit acht Maschinenachsen. Das beanspruchte Verfahren ist besonders zur Verwendung mit Roboter-Manipulatoren mit einer Vielzahl an Gelenken und Drehachsen geeignet. Infolgedessen ist das beanspruchte Verfahren auf für künftige Werkzeugmaschinen mit erhöhter Komplexität geeignet und ist besonders lange einsetzbar.

Im beanspruchten Verfahren können im dritten und/oder fünften Schritt eine Orientierung des Werkzeugs in Bezug auf eine Oberfläche des Werkstücks ermittelt werden. Die Orientierung umfasst insbesondere einen Winkel zwischen einer Hauptachse des Werkzeugs und zumindest eines Abschnitts der Oberfläche des Werkstücks. Bei einem als Lackiervorrichtung ausgebildeten Werkzeug kann es prozessrelevant sein, in welchem Winkel Lack auf die Oberfläche des Werkstücks gesprüht wird. Weiter kann bei Werkzeugen wie einem Kugelfräser dessen Orientierung relativ zum Werkstück bestimmend für die erzielbare Fertigungsqualität sein. Eine Orientierung, also eine Einspannrichtung, des Werkstücks kann dazu durch einen Benutzer und/oder ein geeignetes Erfassungsmittel vorgegeben werden. Die Orientierung ist im beanspruchten Verfahren bei zumindest einer der Koordinaten-Transformationen berücksichtigbar. Die Darstellung der Orientierung des Werkzeugs ist mit den Koordinaten-Transformationen kompatibel, so dass ein Berücksichtigen der Orientierung mit reduziertem Rechenaufwand implementierbar ist. Zumindest einer der Schritte des beanspruchten Verfahrens kann wiederholt durchgeführt werden, bis eine angestrebte Orientierung des Werkzeugs erzielt ist. Das beanspruchte Verfahren kann folglich weitestgehend selbsttätig durchgeführt werden. Alternativ oder ergänzend kann bei einer spanenden Bearbeitung durch eine geeignete Winkelstellung des Werkzeugs gegenüber der Oberfläche des Werkstücks eine Oberflächengüte des bearbeiteten Werkstücks eingestellt werden.

In einer weiteren Ausführungsform des beanspruchten Verfahrens kann das Werkzeug asymmetrisch oder chiral ausgebildet sein. Ein asymmetrisches Werkzeug kann ein Werkzeug mit einer Klinge sein, so dass die Tauglichkeit des Werkzeugs durch seine Orientierung bedingt ist. Unter einem chiralen Werkzeug ist beispielsweise eine Hand eines Roboter-Manipulators zu verstehen, das nicht durch eine einzige Drehbewegung in eine gewünschte Ausrichtung bringbar ist. Das beanspruchte Verfahren ist dazu geeignet, derartige zusätzliche Angaben ohne Weiteres zu berücksichtigen und weist somit ein breites mögliches Einsatzspektrum auf. Insbesondere ist mit dem beanspruchten Verfahren eine Falschansteuerung infolge der Koordinaten-Transformation vermeidbar, was wiederum einen zuverlässigen Betrieb der Werkzeugmaschine erlaubt.

Darüber hinaus kann das Werkzeug ein Bohrer, ein Fräser, ein Kugelfräser, ein Schneidrad, ein Roboter-Manipulator, eine Schweißvorrichtung ein 3D-Druckkopf, ein Laser, eine Wasserstrahlvorrichtung, eine Plasmastrahlvorrichtung, oder eine Lackiervorrichtung sein. Derartige Werkzeugmaschinen werden mit einer zunehmenden Anzahl an Maschinenachsen hergestellt. Gleichzeitig wird angestrebt, diese mit möglichst einfachen Steuereinheiten zu betreiben. Das beanspruchte Verfahren erlaubt es, Bearbeitungspfade mit einer erhöhten Präzision abzufahren und so Werkstück genauer zu bearbeiten. Das beanspruchte Verfahren ist daher für eine Vielzahl an unterschiedlichen Werkzeugmaschinen geeignet.

Im beanspruchten Verfahren können beim Ablaufen des angepassten Steuerbefehlssatzes nur Maschinenachsen bewegt werden, für die im dritten Schritt Steuerbefehle ermittelt werden. Die im zweiten Schritt gesperrte Drehachse kann beim Ablaufen des angepassten Steuerbefehlssatzes somit gesperrt sein, also starr gehalten werden. Insbesondere kann bei einer spanenden Bearbeitung des Werkstücks die im zweiten Schritt gesperrte Drehachse derart in der Bearbeitungsstellung gehalten werden, dass eine Hebelarmlänge von der gesperrten Drehachse zum Werkzeug minimiert ist. Hierdurch ist eine Vibration des Werkstücks minimierbar und eine erzielbare Fertigungspräzision gesteigert. Ebenso wird die erreichbare Zustellung, und somit das erzielbare Spanvolumen pro Zeit erhöht. Hieraus wiederum resultiert eine erhöhte Produktivität der Werkzeugmaschine. Weiter wird so die Zugänglichkeit zum Werkzeug verbessert.

Ferner kann im beanspruchten Verfahren die zumindest eine Drehachse, die im zweiten Schritt gesperrt wird, anhand einer festen oder einstellbaren Vorgabe ermittelt werden. Beispielsweise ist für einen Bautyp der Werkzeugmaschine vorgebbar, welche zumindest eine Drehachse im zweiten Schritt zu sperren ist. Dies stellt eine feste Vorgabe dar. Ebenso kann die Drehachse durch eine Benutzervorgabe ermittelt werden, durch die die Drehachse unmittelbar ausgewählt wird, oder anhand eines durch den Benutzer vorgebbaren Kriteriums ausgewählt werden. Alternativ kann die zumindest eine Drehachse, die im zweiten Schritt gesperrt wird, anhand eines Algorithmus ermittelt werden, der zu einem Auswerten des Teileprogramms ausgebildet ist. Unter anderem kann durch den Algorithmus der Ablauf des angepassten Steuerbefehlssatzes simuliert werden. Basierend auf der Simulation ist ein einstellbares Kriterium ermittelbar, auf dessen Basis die Drehachse ausgewählt wird. Beispielsweise ist eine zu erwartende Vibration des Werkstücks und/oder des Werkzeugs ermittelbar, so dass die Drehachse für das Sperren im zweiten Schritt ausgewählt wird, bei der die geringsten Vibrationen zu erwarten sind. Alternativ oder ergänzend kann auch ein Energiebedarf oder ein Verschleiß beim Ablaufen des angepassten Steuerbefehlssatzes ermittelt werden. Das beanspruchte Verfahren kann in mehreren Durchgängen durchgeführt werden. Der Algorithmus kann als Optimierungsalgorithmus ausgebildet sein, insbesondere als Künstliche Intelligenz mit einer Simulation der Werkzeugmaschine. Das beanspruchte Verfahren ist dadurch mit einer Vielzahl an Algorithmen zur Optimierung des Betriebs der jeweiligen Werkzeugmaschine kombinierbar. Dies können beispielsweise Optimierungen im Hinblick auf einen minimierten Energiebedarf, eine minimale Bearbeitungsdauer oder einen minimierten Verschleiß des Werkzeugs und/oder von Antriebsmitteln sein. Das technische Potential der entsprechenden Werkzeugmaschine wird so weiter ausgeschöpft.

Die zugrundeliegende Aufgabenstellung wird ebenso durch ein erfindungsgemäßes Computerprogrammprodukt gelöst, das zum Betreiben einer Werkzeugmaschine ausgebildet ist. Das Computerprogrammprodukt ist dazu geeignet, ein Teileprogramm zu verarbeiten und korrespondierend dazu einen angepassten Steuerbefehlssatz an die Werkzeugmaschine auszugeben. Das Computerprogrammprodukt ist zu einem Ablaufen auf einer Steuereinheit geeignet, die der Werkzeugmaschine zumindest funktionell zugeordnet ist. Das Computerprogrammprodukt kann monolithisch ausgebildet sein, also zum Ablaufen auf einer einzigen Hardwareplattform. Alternativ kann das Computerprogrammprodukt modular ausgebildet sein, also eine Mehrzahl an Teilprogrammen umfassen, die auf unterschiedlichen Hardwareplattformen ablaufen und über eine kommunikative Datenverbindung zusammenwirken, beispielsweise über eine Internetverbindung oder eine Mobilfunkverbindung. Erfindungsgemäß ist das Computerprogrammprodukt dazu ausgebildet, zumindest eines der oben dargestellten Verfahren durchzuführen. Das erfindungsgemäße Computerprogrammprodukt erfordert lediglich reduzierte Rechenleistung für einen hinreichend schnellen Ablauf. Folglich ist das erfindungsgemäße Computerprogrammprodukt im Wesentlichen ohne Leistungseinbuße auf der Steuereinheit ausführbar.

Ebenso wird die eingangs skizzierte Aufgabenstellung durch eine erfindungsgemäße Steuereinheit gelöst, die zu einem Betreiben einer Werkzeugmaschine ausgebildet ist. Die Steuereinheit ist zu einem Ansteuern von Antriebsmitteln für je eine Maschinenachse der Werkzeugmaschine geeignet. Hierzu verfügt die Steuereinheit über eine Speichereinheit und eine Recheneinheit, die dazu ausgebildet sind, ein Computerprogrammprodukt auf der Steuereinheit auszuführen. Erfindungsgemäß ist die Steuereinheit dazu ausgebildet, zumindest eine Ausführungsform des oben beschriebenen Verfahrens durchzuführen. Alternativ oder ergänzend kann das Computerprogrammprodukt, das auf der Steuereinheit ausführbar gespeichert ist, gemäß einer der oben dargestellten Ausführungsformen ausgebildet sein.

Ferner wird die oben dargestellte Aufgabe durch eine erfindungsgemäße Werkzeugmaschine gelöst. Die Werkzeugmaschine umfasst eine Mehrzahl an Maschinenachsen, die jeweils über ein Antriebsmittel betätigbar sind, und eine Steuereinheit. Die Steuereinheit ist dazu ausgebildet, gemäß einem angepassten Steuerbefehlssatz die Antriebsmittel anzusteuern, also zu betätigen. Erfindungsgemäß ist die Steuereinheit gemäß einer der oben beschriebenen Ausführungsformen ausgebildet.

Nicht vom Schutzumfang umfasst ist ein Simulationsprogrammprodukt, das zu einem Simulieren eines Betriebsverhaltens einer Steuereinheit einer Werkzeugmaschine geeignet ist. Unter einem Simulationsprogrammprodukt ist hierbei ein auf Simulation gerichtetes Computerprogrammprodukt zu verstehen. Mittels des Simulationsprogrammprodukts ist ein Betriebsverhalten zumindest der Steuereinheit simulierbar. Ergänzend kann auch eine Bewegung eines Werkzeugs der Werkzeugmaschine zum simulierten Betriebsverhalten gehören. Erfindungsgemäß umfasst das simulierte Betriebsverhalten zumindest ein Abfahren eines Bearbeitungspfads durch das Werkzeug der Werkzeugmaschine. Der abzufahrende Bearbeitungspfad ist dadurch durch einen angepassten Steuerbefehlssatz bestimmt, der mittels der zu simulierenden Steuereinheit erzeugbar ist. Der angepasste Steuerbefehlssatz ist gemäß einer Ausführungsform des skizzierten Verfahrens ermittelt. Das Simulationsprogrammprodukt kann dazu beispielsweise als ein sogenannter Digitaler Zwilling, wie beispielsweise in der Druckschrift US 2017/286572 A1 beschrieben, der Steuereinheit und/oder der Werkzeugmaschine ausgebildet sein. Durch das Simulationsprogrammprodukt sind unterschiedliche angepasste Steuerbefehlssätze erprobbar und validierbar. Durch das beschriebene Verfahren sind die angepassten Steuerbefehlssätze schnell ermittelbar und für das Simulationsprogrammprodukt unmittelbar auswertbar. Hierdurch ist auch das Simulationsprogrammprodukt schnell durchführbar, so dass zeitsparend eine Vielzahl an angepassten Steuerbefehlssätzen per Simulation auswertbar sind. Das Simulationsprogrammprodukt kann daher ohne Weiteres begleitend zum Betrieb der Werkzeugmaschine durchgeführt werden. Das Simulationsprogrammprodukt kann dazu ausgebildet sein, simulierte angepasste Steuerbefehlssätze nach einem einstellbaren Kriterium auszuwerten und auszuwählen.

Die Erfindung wird im Folgenden anhand einer Ausführungsform in einer Figur näher erläutert. Es zeigt im Einzelnen:

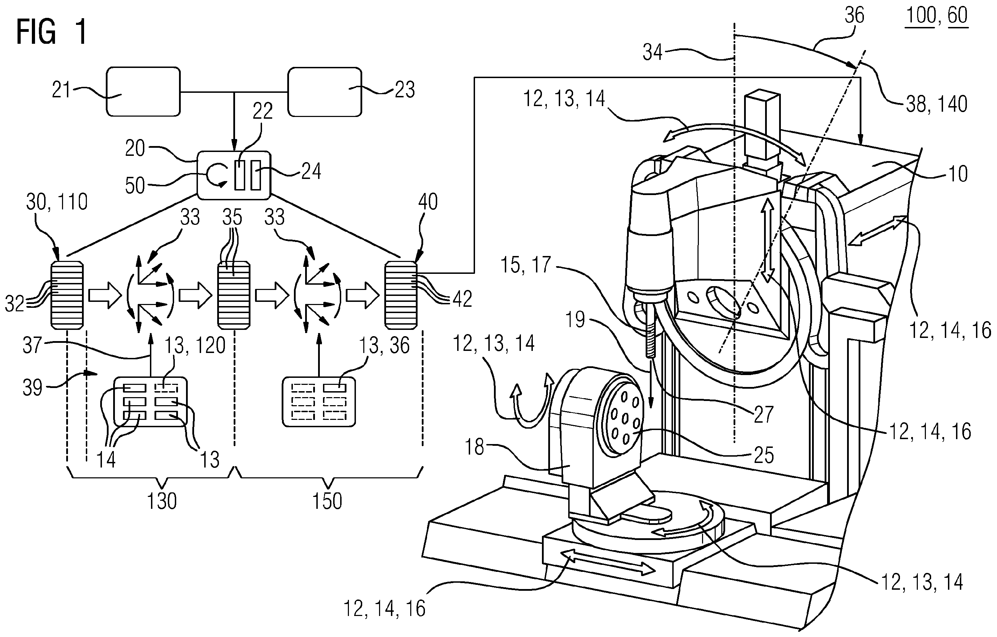

- FIG 1: eine schematische Darstellung einer ersten Ausführungsform des beanspruchten Verfahrens.

Eine erste Ausführungsform des beanspruchten Verfahrens 100 ist in FIG 1 schematisch dargestellt. Das Verfahren 100 dient zum Betreiben einer Werkzeugmaschine 10, die über eine Mehrzahl an Maschinenachsen 14 verfügt, um die bzw. entlang der ein Werkzeug 15 beweglich ist. Das Werkzeug 15 ist als Fräser 17 ausgebildet und dazu geeignet, ein nicht näher gezeigtes Werkstück 25 spanend zu bearbeiten. Die Spitze des Fräsers 17 bildet einen Referenzpunkt 27 an der Werkzeugmaschine 10, nämlich den sogenannten Tool Center Point, kurz TCP. Die Werkzeugmaschine 10 ist dementsprechend eine Fräsmaschine.

Das Werkstück 25 ist in einer Einspannung 18 der Werkzeugmaschine 10 einspannbar. Die Einspannung 18 ist um eine Drehachse 13 drehbar ausgebildet. Jede der Maschinenachsen 14 ist mit einem nicht näher gezeigten Antriebsmittel 12 zumindest funktional gekoppelt, so dass die jeweilige Maschinenachse 14 betätigbar ist. Die in FIG 1 gezeigte Werkzeugmaschine 10 umfasst drei translatorische Achsen 16 und drei Drehachsen 13, durch die das Werkzeug 15 entlang eines Bearbeitungspfads führbar und/oder ausrichtbar ist. Die Antriebsmittel 12 sind zumindest funktional mit einer Steuereinheit 20 gekoppelt, die dazu ausgebildet ist, die Antriebsmittel 12 zu betätigen. Die Steuereinheit 20 umfasst eine Recheneinheit 22 und eine Speichereinheit 24, die dazu ausgebildet sind, ein Computerprogrammprodukt 50 auszuführen, mit dem das beanspruchte Verfahren 100 durchgeführt wird.

Das Verfahren 100 umfasst einen ersten Schritt 110, in dem ein Teileprogramm 30 bereitgestellt wird, das eine Mehrzahl an Teileprogramm-Befehlen 32 umfasst, durch die ein Bearbeitungspfad des Werkzeugs 15 bezogen auf das Werkstück 25 bestimmt ist. Das Teileprogramm 30 ist folglich unabhängig von der eingesetzten Werkzeugmaschine 10. Das Teileprogramm 30 wird im beanspruchten Verfahren 100 weiterverarbeitet um das Werkstück 25 zu bearbeiten. Weiter umfasst das Verfahren 100 einen zweiten Schritt 120, in dem eine der Drehachsen 13 unter den Maschinenachsen 12 der Werkzeugmaschine 10 ermittelt wird, die gesperrt wird. Durch das Sperren verbleibt die ermittelte Drehachse 13 in einer Sperrstellung 34. Dies erfolgt durch ein mechanisches Blockieren, dadurch, dass Steuerbefehle an das entsprechende Antriebsmittel 12 unterdrückt werden, und/oder das entsprechende Antriebsmittel 12 die Annahme von Steuerbefehlen, die zu einer Bewegung führen, verweigert. Die in der Sperrstellung 34 gesperrte Drehachse 13 wird durch eine Benutzereingabe an einer Eingabeeinheit 21 ausgewählt oder über einen Algorithmus 23, der dazu ausgebildet ist, das Teileprogramm 30 auszuwerten. Insbesondere ist der Algorithmus 23 dazu ausgebildet, welche der Drehachsen 13 für den zweiten Schritt 120 am zweckmäßigsten ist.

Ferner gehört ein dritter Schritt 130 zum beanspruchten Verfahren 100, in dem basierend auf dem Teileprogramm 30 Steuerbefehle 35 ermittelt werden. Zum Ermitteln der Steuerbefehle 35 wird auf das Teileprogramm 30 eine Koordinaten-Transformation 33 angewandt. Die Steuereinheit 20 ist dazu ausgebildet, eine Koordinaten-Transformation 33 um eine Anzahl an Maschinenachsen 14 durchzuführen, die geringer ist als die Anzahl an Maschinenachsen 14, die die Werkzeugmaschine 10 aufweist. Bei der Koordinaten-Transformation 33 werden die drei translatorischen Achsen 14 und zwei Drehachsen 13 der Werkzeugmaschine 10 berücksichtigt. Die Steuereinheit 20 ist dementsprechend dazu geeignet, eine Koordinaten-Transformation 33 um fünf Maschinenachsen 33 auf einmal durchzuführen. Die berücksichtigten Maschinenachsen 14, also die drei translatorischen Achsen 14 und die zwei Drehachsen 13 gehören zu einem Maschinenachsensatz 39. Die Berücksichtigung des Maschinenachsensatzes 39 ist durch den Pfeil 37 dargestellt. Die im zweiten Schritt 120 ermittelte und gesperrte Drehachse 13 wird bei der Koordinaten-Transformation 33 ausgeschlossen. Der Ausschluss der gesperrten Drehachse 13 ist in FIG 1 durch die unterbrochenen Striche im Maschinenachsensatz 39 versinnbildlicht.

Zum beanspruchten Verfahren 100 gehört auch ein vierten Schritt 140, in dem die im zweiten Schritt 120 ermittelte und gesperrte Drehachse 13 entsperrt, also für eine Bewegung freigegeben wird. Das Werkzeug 15 wird um die entsprechende Drehachse 13 bewegt und in eine Bearbeitungsstellung 38 gebracht. Während des vierten Schritts 140 wird die Drehbewegung 36, mit der die Drehachse 13 von der Sperrstellung 34 in die Bearbeitungsstellung 38 gebracht wird, ebenfalls erfasst. Dazu werden eine Richtung der Drehbewegung 36 und ein zugehöriger Drehwinkel betragsmäßig erfasst. Daran schließt sich ein fünfter Schritt 150 an, in dem auf die im dritten Schritt 130 ermittelten Steuerbefehle 35 eine Koordinaten-Transformation 33 angewandt wird. Die Koordinaten-Transformation 33 im fünften Schritt 150 erfolgt ausschließlich um die im zweiten Schritt 120 ermittelte und gesperrte Drehachse 13. Die Koordinaten-Transformation 33 im fünften Schritt 150 berücksichtigt dabei die im vierten Schritt 140 erfasste Drehbewegung 36, also deren Richtung und deren betragsmäßigen Drehwinkel. Durch die im fünften Schritt 150 durchgeführte Koordinaten-Transformation 33 wird ein angepasster Steuerbefehlssatz 40 erzeugt, der eine Mehrzahl an angepassten Steuerbefehlen 42 umfasst. Die angepassten Steuerbefehle 42 sind jeweils an ein Antriebsmittel 12 der Werkzeugmaschine gerichtet und dazu geeignet, eine Betätigung des jeweiligen Antriebsmittels 12 hervorzurufen. Mittels der im fünften Schritt 150 durchgeführten Koordinaten-Transformation 33 werden die im dritten Schritt 130 bereitgestellten Steuerbefehle 35 auf die Bearbeitungsstellung 38 angepasst, die die im zweiten Schritt 120 ermittelte Drehachse 13 bei einem Ablaufen des angepassten Steuerbefehlssatzes 40 einnimmt.

Im Verfahren 100 wird ferner eine Orientierung 19 des Werkzeugs 15 berücksichtigt. Das Verfahren 100 wird unter Auswählen einer anderen Drehachse 13 im zweiten Schritt 120 erneut durchgeführt, wenn ein zunächst ermittelter angepasster Steuerbefehlssatz 40 zu einer Orientierung 19 des Werkzeugs 15 führt, in der die angestrebte Bearbeitung des Werkstücks 25 unmöglich oder zumindest unpraktikabel ist. Eine derartige Berücksichtigung der Orientierung 19 des Werkzeugs 15 ist durch den Algorithmus 23 durchführbar. Der Algorithmus 23 kann auch dazu ausgebildet sein, einen zu erwartenden Energiebedarf und/oder einen zu erwartenden Verschleiß der Werkzeugmaschine 10, insbesondere eines Antriebsmittels 12 und/oder des Werkzeugs 15, zu ermitteln. Der Algorithmus 23 kann hierzu als Optimierungsalgorithmus, insbesondere als Künstliche Intelligenz, ausgebildet sein. Der Steuerbefehlssatz 40, der nach einem oder mehreren Durchgängen des Verfahrens 100 ermittelt wird, wird an die Werkzeugmaschine 10 ausgegeben, um das Werkstück 25 zu bearbeiten.

Ferner wird das Betriebsverhalten der Steuereinheit 20 der Werkzeugmaschine 10 mit einem nicht näher gezeigten Simulationsprogrammprodukt 60 nachgestellt. Das Simulationsprogrammprodukt 60 ist als Digitaler Zwilling ausgebildet, in dem auch ein mechanisches Verhalten der Werkzeugmaschine 10 nachstellbar ist. Das mechanische Verhalten der Werkzeugmaschine 10 umfasst unter anderem ein Vibrationsverhalten der Werkzeugmaschine 10 um zumindest ihrer Drehachsen 13. Durch das Simulationsprogrammprodukt 60 ist ein in einem Durchgang des Verfahrens 100 ermittelter angepasster Steuerbefehlssatz 40 erprobbar. Insbesondere ist dadurch berechenbar, in welchem Ausmaß Vibrationen an der Werkzeugmaschine 10 zu erwarten sind und inwieweit sich diese auf die zu erwartende Fertigungsgenauigkeit auswirkt. Die mit dem beanspruchten Verfahren 100 ermittelten angepassten Steuerbefehlssätze 40 sind in einfacher Weise durch das Simulationsprogrammprodukt 60 auswertbar, so dass eine erhöhte Anzahl an angepassten Steuerbefehlssätzen 40 schnell prüfbar sind. Das Simulationsprogrammprodukt 60 ist dazu geeignet, das Verfahren 100 in mehreren Durchgängen ablaufen zu lassen um eine gesteigerte Fertigungspräzision zu erzielen. Hierzu umfasst das Simulationsprogrammprodukt 60 ein digitales Abbild der Steuereinheit 20 und der Werkzeugmaschine 10, insbesondere der zugehörigen Antriebsmittel 12.

## Patentansprüche

1. Verfahren (100) zum Betreiben einer Werkzeugmaschine (10), die eine erste Anzahl an Maschinenachsen (14) aufweist, die jeweils mittels eines Antriebsmittels (12) beweglich sind und über eine Steuereinheit (20) betätigbar sind, die dazu ausgebildet ist, bezogen auf einen Referenzpunkt (27) an der Werkzeugmaschine (10), eine Koordinaten-Transformation (33) um eine zweite Anzahl an Maschinenachsen (12) durchzuführen, umfassend den Schritt:
a) Bereitstellen eines Teileprogramms (30) zu einem Bearbeiten eines Werkstücks (25) mittels der Werkzeugmaschine (10);
**gekennzeichnet durch** die Schritte:
b) Ermitteln zumindest einer Drehachse (13) unter den Maschinenachsen (12) und Sperren der ermittelten zumindest einen Drehachse (13) für Betätigungen;
c) Ermitteln von Steuerbefehlen (35) für eine Mehrzahl an Maschinenachsen (12) ausschließlich der im Schritt b) ermittelten zumindest einen Drehachse (13);
d) Einstellen der zumindest einen im Schritt b) ermittelten Drehachse (13) in eine Bearbeitungsstellung (38) und Ermitteln einer korrespondierenden Drehbewegung (36);
e) Ermitteln eines angepassten Steuerbefehlssatzes (40) für die Mehrzahl an Maschinenachsen (12) anhand der im Schritt c) ermittelten Steuerbefehle (35) und der im Schritt d) ermittelten Drehbewegung (36);
wobei das Werkstück (15) durch Ablaufen des angepassten Steuerbefehlssatzes (40) bearbeitet wird.

2. Verfahren (100) nach Anspruch 1, **dadurch gekennzeichnet, dass** die erste Anzahl an Maschinenachsen (14) zumindest drei Drehachsen (13) umfasst.

3. Verfahren (100) nach Anspruch 1 oder 2, **dadurch gekennzeichnet, dass** die erste Anzahl an Maschinenachsen (12) höher ist als die zweite Anzahl an Maschinenachsen (12).

4. Verfahren (100) nach einem der Ansprüche 1 bis 3, **dadurch gekennzeichnet, dass** der Referenzpunkt (27) der Werkzeugmaschine (10) ein Werkzeugbezugspunkt ist.

5. Verfahren (100) nach einem der Ansprüche 1 bis 4, **dadurch gekennzeichnet, dass** zumindest eine der Maschinenachsen (12) zu einem Bewegen eines Werkzeugs (15) ausgebildet ist oder zu einem Bewegen des Werkstücks (25) ausgebildet ist.

6. Verfahren (100) nach einem der Ansprüche 1 bis 5, **dadurch gekennzeichnet, dass** die Schritte d) und e) für eine Mehrzahl an Drehachsen (13) durchgeführt werden.

7. Verfahren (100) nach einem der Ansprüche 1 bis 6, **dadurch gekennzeichnet, dass** im Schritt c) und/oder e) eine Orientierung (19) des Werkzeugs (15) in Bezug auf eine Oberfläche des Werkstücks (25) ermittelt wird.

8. Verfahren (100) nach einem der Ansprüche 1 bis 7, **dadurch gekennzeichnet, dass** das Werkzeug (15) asymmetrisch oder chiral ausgebildet ist.

9. Verfahren (100) nach einem der Ansprüche 1 bis 8, **dadurch gekennzeichnet, dass** das Werkzeug (15) ein Bohrer, ein Fräser (17), ein Kugelfräser, ein Drehwerkzeug, ein Schneidrad, ein Roboter-Manipulator, eine Schweißvorrichtung, ein 3D-Drucckopf, ein Laser, eine Wasserstrahlvorrichtung, eine Plasmastrahlvorrichtung, oder eine Lackiervorrichtung ist.

10. Verfahren (100) nach einem der Ansprüche 1 bis 9, **dadurch gekennzeichnet, dass** beim Ablaufen des angepassten Steuerbefehlssatzes (40) nur Maschinenachsen (12) bewegt werden, für die im Schritt c) Steuerbefehle (35) ermittelt werden.

11. Verfahren (100) nach einem der Ansprüche 1 bis 10, **dadurch gekennzeichnet, dass** die zumindest eine Drehachse (13) in Schritt b) anhand einer festen oder einstellbaren Vorgabe (21) ermittelt werden oder anhand eines Algorithmus (23), der zu einem Auswerten des Teileprogramms (30) ausgebildet ist.

12. Computerprogrammprodukt (50) zum Betreiben einer Werkzeugmaschine (10), das zum Verarbeiten von Teileprogrammen (30) und zum Ausgeben eines angepassten Steuerbefehlssatzes (40) an die Werkzeugmaschine (10) ausgebildet ist, **dadurch gekennzeichnet, dass** das Computerprogrammprodukt (50) zum Durchführen eines Verfahrens (100) nach einem der Ansprüche 1 bis 11 ausgebildet ist.

13. Steuereinheit (20) zum Betreiben einer Werkzeugmaschine (10), die zum Ansteuern von Antriebsmitteln (12) für Maschinenachsen (14) der Werkzeugmaschine (10) ausgebildet ist und über eine Speichereinheit (24) und eine Recheneinheit (22) zum Ausführen eines Computerprogrammprodukts (50) ausgebildet ist, **dadurch gekennzeichnet, dass** die Steuereinheit (20) zum Durchführen eines Verfahrens (100) nach einem der Ansprüche 1 bis 11 ausgebildet ist und/oder mit einem Computerprogrammprodukt (50) nach Anspruch 12 ausgestattet ist.

14. Werkzeugmaschine (10), umfassend eine Mehrzahl an Maschinenachsen (14), die jeweils über zumindest ein Antriebsmittel (12) betätigbar sind, und eine Steuereinheit (20), die zu einem Ansteuern der Antriebsmittel (12) ausgebildet ist, **dadurch gekennzeichnet, dass** die Steuereinheit (20) nach Anspruch 13 ausgebildet ist.

## Claims

1. Method (100) for operating a machine tool (10) having a first number of machine axes (14), each of which can be moved by means of a drive means (12) and can be actuated via a control unit (20) which is designed to perform a coordinates transformation (33) around a second number of machine axes (12) relative to a reference point (27) on the machine tool (10), comprising the step:
a) providing a parts program (30) for the machining of a workpiece (25) by means of the machine tool (10); **characterised by** the steps:
b) determining at least one axis of rotation (13) from among the machine axes (12) and blocking the at least one axis of rotation (13) determined for actuations;
c) determining control commands (35) for a plurality of machine axes (12) excluding the at least one axis of rotation (13) determined in step b);
d) setting the at least one axis of rotation (13) determined in step b) into a machining position (38) and determining a corresponding rotational movement (36);
e) determining an adapted set of control commands (40) for the plurality of machine axes (12) on the basis of the control commands (35) determined in step c) and the rotational movement (36) determined in step d);
wherein the workpiece (15) is machined by means of executing the adapted set of control commands (40).

2. Method (100) according to claim 1, **characterised in that** the first number of machine axes (14) comprises at least three axes of rotation (13).

3. Method (100) according to claim 1 or 2, **characterised in that** the first number of machine axes (12) is greater than the second number of machine axes (12).

4. Method (100) according to one of claims 1 to 3, **characterised in that** the reference point (27) of the machine tool (10) is a tool centre point.

5. Method (100) according to one of claims 1 to 4, **characterised in that** at least one of the machine axes (12) is designed to move a tool (15) or is designed to move the workpiece (25).

6. Method (100) according to one of claims 1 to 5, **characterised in that** steps d) and e) are performed for a plurality of axes of rotation (13).

7. Method (100) according to one of claims 1 to 6, **characterised in that** an orientation (19) of the tool (15) relative to a surface of the workpiece (25) is determined in step c) and/or e).

8. Method (100) according to one of claims 1 to 7, **characterised in that** the tool (15) has an asymmetric or chiral design.

9. Method (100) according to one of claims 1 to 8, **characterised in that** the tool (15) is a drill, a milling cutter (17), a spherical cutter, a turning tool, a cutting disk, a robot manipulator, a welding device, a 3D print head, a laser, a water jet device, a plasma beam device, or a painting device.

10. Method (100) according to one of claims 1 to 9, **characterised in that** when executing the adapted set of control commands (40), only those machine axes (12) for which control commands (35) were determined in step c) are moved.

11. Method (100) according to one of claims 1 to 10, **characterised in that** the at least one axis of rotation (13) is determined in step b) with reference to a fixed or settable specification (21) or on the basis of an algorithm (23) which is designed to evaluate the parts program (30).

12. Computer program product (50) for operating a machine tool (10), being designed to process parts programs (30) and to output an adapted set of control commands (40) to the machine tool (10), **characterised in that** the computer program product (50) is designed to perform a method (100) according to one of claims 1 to 11.

13. Control unit (20) for operating a machine tool (10), being designed to activate drive means (12) for machine axes (14) of the machine tool (10) and being designed to execute a computer program product (50) by means of a memory unit (24) and a computing unit (22), **characterised in that** the control unit (20) is designed to perform a method (100) according to one of claims 1 to 11 and/or is provided with a computer program product (50) according to claim 12.

14. Machine tool (10) comprising a plurality of machine axes (14), each of which can be actuated via at least one drive means (12), and a control unit (20) which is designed to activate the drive means (12), **characterised in that** the control unit (20) is designed according to claim 13.

## Revendications

1. Procédé (100) pour faire fonctionner une machine-outil (10), qui a un premier nombre d'axes (14) de machine, qui sont mobiles respectivement au moyen d'un moyen (12) d'entraînement et qui peuvent être actionnés par une unité (20) de commande, qui est constituée pour effectuer, rapporté à un point (27) de référence sur la machine-outil (10), une transformation (33) de coordonnées autour d'un deuxième nombre d'axes (12) de machine, comprenant le stade :
a) se procurer un programme (30) de pièce pour un usinage d'une pièce (25) au moyen de la machine-outil (10) ;
**caractérisé par** les stades :
b) déterminer au moins un axe (13) de rotation parmi les axes (12) de machine et blocage d'au moins un axe (13) de rotation déterminé pour des actionnements ;
c) déterminer des instructions (35) de commande d'une pluralité d'axes (12) de machine à l'exclusion du au moins un axe (13) de rotation déterminé au stade b) ;
d) mettre le au moins un axe (13) de rotation déterminé au stade b) dans une position (38) d'usinage et déterminer un mouvement (36) de rotation correspondant ;
e) déterminer un ensemble (40) d'instructions de commande adapté de la pluralité d'axes (12) de machine à l'aide des instructions (35) de commande déterminées au stade c) et du mouvement (36) de rotation déterminé au stade d) ;
dans lequel on usine la pièce (15) en faisant se dérouler l'ensemble (40) d'instructions de commande adapté.

2. Procédé (100) suivant la revendication 1, **caractérisé en ce que** le premier nombre d'axes (14) de machine comprend au moins trois axes (13) de rotation.

3. Procédé (100) suivant la revendication 1 ou 2, **caractérisé en ce que** le premier nombre d'axes (12) de machine est plus grand que le deuxième nombre d'axes (12) de machine.

4. Procédé (100) suivant l'une des revendications 1 à 3, **caractérisé en ce que** le point (27) de référence de la machine-outil (10) est un point de référence d'outil.

5. Procédé (100) suivant l'une des revendications 1 à 4, **caractérisé en ce qu'**au moins l'un des axes (12) de machine est constitué pour un mouvement d'un outil (15) ou est constitué pour un mouvement de la pièce (25).

6. Procédé (100) suivant l'une des revendications 1 à 5, **caractérisé en ce que** l'on effectue les stades d) et e) pour une pluralité d'axes (13) de rotation.

7. Procédé (100) suivant l'une des revendications 1 à 6, **caractérisé en ce que**, dans le stade c) et/ou e), on détermine une orientation (19) de l'outil (15) par rapport à une surface de la pièce (25).

8. Procédé (100) suivant l'une des revendications 1 à 7, **caractérisé en ce que** l'outil (15) est dissymétrique ou chiral.

9. Procédé (100) suivant l'une des revendications 1 à 8, **caractérisé en ce que** l'outil (15) est un foret, une fraise (17), une fraise sphérique, un outil tournant, un couteau circulaire, un manipulateur de robot, un dispositif de soudage, une tête d'impression en 3D, un laser, un dispositif à jet d'eau, un dispositif à faisceau de plasma ou un dispositif de vernissage.

10. Procédé (100) suivant l'une des revendications 1 à 9, **caractérisé en ce que**, lorsque l'ensemble (40) d'instructions de commande adapté se déroule, on ne déplace que les axes (12) de machine, pour lesquels des instructions (35) de commande ont été déterminées au stade c).

11. Procédé (100) suivant l'une des revendications 1 à 10, **caractérisé en ce que** l'on détermine le au moins un axe (13) de rotation au stade b) à l'aide d'une prescription (21) fixe ou réglable ou à l'aide d'un algorithme (23), qui est constitué pour une évaluation du programme (30) de pièce.

12. Produit (50) de programme d'ordinateur pour faire fonctionner une machine-outil (10), qui est constituée pour le traitement de programmes (30) de pièce et pour l'envoi d'un ensemble (40) d'instructions de commande adapté à la machine-outil (10), **caractérisé en ce que** le produit (50) de programme d'ordinateur est constitué pour exécuter un procédé (100) suivant l'une des revendications 1 à 11.

13. Unité (20) de commande pour faire fonctionner une machine-outil (10), qui est constituée pour la commande de moyens (12) d'axes (14) de machine de la machine-outil (10) et qui est constituée pour l'exécution d'un produit (50) de programme d'ordinateur par une unité (24) de mémoire et une unité (22) informatique, **caractérisée en ce que** l'unité (20) de commande est constituée pour exécuter un procédé (100) suivant l'une des revendications 1 à 11 et/ou est équipée d'un produit (50) de programme d'ordinateur suivant la revendication 12.

14. Machine-outil (10), comprenant une pluralité d'axes (14) de machine, qui peuvent être actionnés respectivement par au moins un moyen (12) d'entraînement et une unité (20) de commande, qui est constituée pour une commande des moyens (12) d'entraînement, **caractérisée en ce que** l'unité (20) de commande est constituée suivant la revendication 13.
